Europäisches Patentamt

European Patent Office

Office européen des brevets

(11) Veröffentlichungsnummer: **0 182 377**
**A2**

## (12) EUROPÄISCHE PATENTANMELDUNG

(21) Anmeldenummer: **85114761.1**

(22) Anmeldetag: **21.11.85**

(51) Int. Cl.⁴: **H 01 G 4/08,** H 01 G 4/30, H 01 L 21/31

(30) Priorität: **23.11.84 DE 3442790**

(43) Veröffentlichungstag der Anmeldung: **28.05.86**
**Patentblatt 86/22**

(84) Benannte Vertragsstaaten: **AT DE GB**

(71) Anmelder: **Bäuerle, Dieter, Prof. Dr., Oberklammer Strasse 47, A-4203 Altenberg/Linz (AT)**

(72) Erfinder: **Bäuerle, Dieter, Prof. Dr., Oberklammer Strasse 47, A-4203 Altenberg/Linz (AT)**

(74) Vertreter: **Mehl, Ernst, Dipl.-Ing. et al, Postfach 22 01 76, D-8000 München 22 (DE)**

(54) Verfahren zur Herstellung von Dünnschichtkondensatoren.

(57) Mit dem erfindungsgemässen Verfahren lassen sich Dünnschichtkondensatoren (20) mit LCVD-Technologie auf einem Substrat herstellen. Dieses Substrat kann insbesondere ein solches einer IC-Schaltung sein.

0 182 377

Prof. Dr. Dieter Bäuerle
Johannes-Kepler-Universität
A-4040 Linz / Österreich

unser Zeichen

VPA 84 P 8 0 5 8 E

## Verfahren zur Herstellung von Dünnschichtkondensatoren

Die vorliegende Erfindung bezieht sich auf ein Verfahren zur Herstellung von Dünnschichtkondensatoren wie im Oberbegriff des Patentanspruches 1 angegeben.

Aus dem Stand der Technik sind elektrische Dünnschichtkondensatoren bekannt. Solche Kondensatoren bestehen aus einer Folge abwechselnd aufeinanderliegender Elektrodenschichten und dielektrischer Schichten, wobei jeweils abwechselnd die Elektrodenschichten für den einen Pol und für den anderen Pol des Kondensators zusammengefaßt sind. Als Material für die dielektrischen Schichten werden Titandioxid, Titanate, Aluminiumoxid, Siliziumdioxid und dgl. verwendet. Wesentliches Problem bei der Herstellung solcher Dünnschichtkondensatoren ist, möglichst dünne dielektrische Schichten herzustellen, die jedoch die elektrischen Bedingungen erfüllen, insbesondere genügende Durchschlagsfestigkeit haben.

Aufgabe der vorliegenden Erfindung ist es, ein Verfahren anzugeben, mit dem sich derartige Dünnschichtkondensatoren in technologisch möglichst wenig aufwendiger Weise herstellen lassen. Eine Weiterführung der Aufgabenstellung ist, das Verfahren so auszugestalten, daß es geeignet ist, derartige Kondensatoren auf als Substrat dienenden Halbleiterchips herzustellen.

Diese Aufgabe wird mit den Merkmalen des Patentanspruchs 1 gelöst. Weitere Ausgestaltungen und Weiterbildungen der Er-

Bts 1 Kow / 19.11.1984

findung gehen aus den Unteransprüchen hervor.

Für die Erfindung ist von Versuchsergebnissen ausgegangen
worden, wie sie in Appl. Phys. Lett., Bd. 43 (5), (1. Sept.
1983), S. 454 bis 456 und aus Materials Lett., Bd. 2, (März
1984), S. 263/264 bekannt sind. Es ist in diesen Druckschriften beschrieben, wie man dünne Schichten aus Aluminiumoxid und Siliziumdioxid sowie Aluminium und dergleichen
durch Fotoabscheidung, d.h. unter Zuhilfenahme von Laserstrahlung, herstellen kann. Mit z.B. Trimethylaluminium und
$N_2O$ als Ausgangsstoffe hat man nach einem CVD-Verfahren
(chemische Abscheidung aus der Gasphase) Aluminiumoxid-
Schichten abgeschieden, wobei während der Abscheidung Laserstrahlung, und zwar des ultravioletten Bereiches, zur Einwirkung gebracht worden ist. Die Ultraviolettstrahlung bewirkt im wesentlichen Fotodissoziation der Reaktionsstoffe,
und zwar dies bei niedrigen Temperaturen, so daß auch das
Substrat, auf dem abzuscheiden ist, keine wesentliche Erwärmung benötigt bzw. erfährt. Für Siliziumdioxid ist z.B. von
Silan und $N_2O$ ausgegangen worden. Als Laser-Strahlungsquellen werden vorzugsweise Excimer-Laser verwendet. Es kann
aber auch mit anderen Lasern, z.B. mit $Kr^+$-Laserstrahlung
mit 530,9 nm gearbeitet werden. Während bei Verwendung von
Excimer-Laserstrahlung die Reaktion photolytisch, d.h. nichtthermisch, aktiviert wird, wird bei Verwendung von $Kr^+$- oder
$CO_2$-Laserstrahlung die Reaktion pyrolytisch aktiviert, d.h.
es tritt dann lokal eine merkliche Temperaturerhöhung auf.
Bezüglich weiterer Einzelheiten zur Durchführung der Abscheidung und Anwendung der Strahlung sei auf die vorgenannten
Druckschriften verwiesen.

Bei der Erfindung ist ein solches lediglich dem Prinzip nach
bekanntes Schichten-Herstellungsverfahren dazu verwendet,
Mehrfach-Schichten übereinanderliegend aufzubringen. Die jeweils dazwischenliegend vorzusehenden Metall-Elektrodenschichten können auch durch Metall-Aufdampfen hergestellt
werden. Abwechselnd aufeinanderfolgend erfolgt eine Fotoabscheidung des Aluminiumoxids, des Siliziumdioxids oder
eines vergleichbaren entsprechenden Dielektrikums und eine
Metallabscheidung.

Das genannte Schichten-Herstellungsverfahren ist geeignet,
sowohl sehr dünne aber dichte Schichten aus Dielektrikum
herzustellen und es läßt sich in einfacher Weise unterbrechen, um die jeweilige Metallbeschichtung für die betreffende Elektrode vorzunehmen.

Das bei der Erfindung angewendete, dem Prinzip nach an sich
bekannte Verfahren der laserinduzierten Abscheidung wird
auch als photolytisches (nicht-thermisches) oder als pyrolytisches (thermisches) LCVD-Verfahren bezeichnet.

Da auch die Metallbeschichtung für die Elektroden unter Einwirkung von Laserlicht, und zwar mit Vorteil durchgeführt
werden kann, weist das erfindungsgemäße Verfahren große Homogenität der Verfahrensschritte auf.

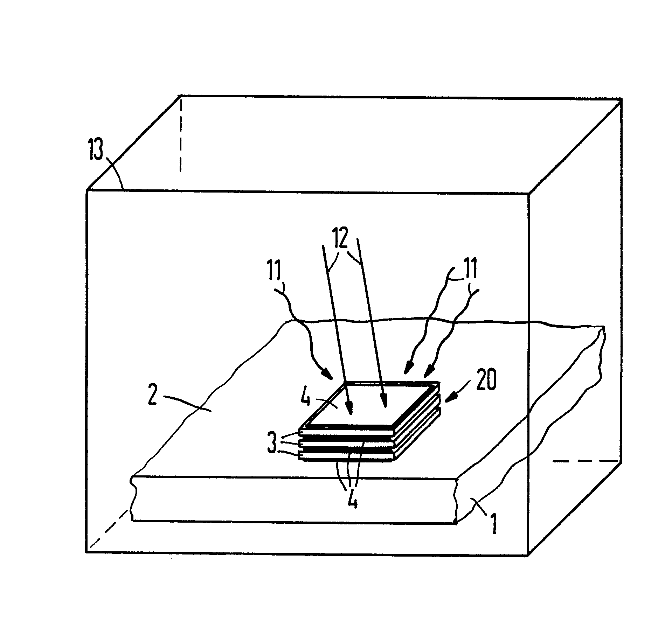

Weitere Erläuterungen gehen aus der anhand der Figur gegebenen Detailbeschreibung zur Erfindung hervor.

Mit 1 ist ein Teilstück eines Halbleiterchips bezeichnet,
auf dessen in der Figur nach oben gerichteter Oberfläche 2
ein erfindungsgemäßer Schichtkondensator herzustellen ist.
Vorzugsweise ist diese Oberfläche 2 die Rückseite des Halbleiterchips 1, wobei als Vorderseite diejenige Seite des
Halbleiterchips angenommen wird, auf der Halbleiter-Elektronikschaltungen nach bekannter Art zu realisieren sind. Die
Erfindung ist aber keineswegs auf eine derartige Herstellung
auf der Rückseite beschränkt.

Mit 3 sind bereits hergestellte Dielektrikum-Schichten und mit 4 sind bereits hergestellte Elektrodenschichten bezeichnet. In der Darstellung der Figur ist gerade die Elektrodenschicht 4 hergestellt. Anschließend wird jetzt eine weitere Dielektrikum-Schicht aus z.B. Siliziumdioxid oder Aluminiumoxid hergestellt, indem in Gasform mit 11 angedeutet das entsprechende obengenannte Ausgangsmaterial zuführt und Laserlicht 12 einwirken läßt. Da sich Laserlicht gut fokussieren und örtlich steuern läßt, kann mit der Plazierung des Laserstrahl-Fleckes der jeweilige Ort der Fotoabscheidung bestimmt werden, d.h. es können auf diese Weise vorgegebene Strukturen (Außenbegrenzungen) erzeugt werden. Mit 13 ist ein Gefäß angedeutet, in dem das LCVD-Verfahren zur erfindungsgemäßen Herstellung eines Dünnschichtkondensators 20, bestehend aus einer Vielzahl abwechselnd aufeinanderfolgender Schichten 3 und 4 hergestellt wird.

Nachfolgend sei ein Beispiel mit Siliziumdioxid als Dielektrikumsmaterial angegeben. Die Durchschlagsfeldstärke einer nach dem LCVD-Verfahren abgeschiedenen Schicht beträgt typischerweise 6 bis 8 MV/cm. Für eine maximale Betriebsspannung von ca. 20 Volt bei einem Sicherheitsfaktor von etwa 2 kommt man zu Dicken von ca. 60 nm für eine einzelne Schicht 3 und erzielt für z.B. 25 mm$^2$ Fläche eine elektrische Kapazität von ca. 15 nF/Schicht. Für die Metall-Elektrodenschichten 4 ergeben sich Dicken von ca. 40 nm. Mit entsprechend vielen übereinander angeordneten Dielektrikum Schichten 3 erhält man entsprechend vielfach größere Kapazitätswerte, die in elektronischen Schaltungen benötigt werden, und für die es praktisch keine vorteilhafte Alternative in integrierten Schaltungen gibt.

Die beigefügte Tabelle enthält verschiedenste Möglichkeiten zur Ausführung der Erfindung.

Tab. 1  Oxidbildung mit Laserstrahlung

| SUBSTRATE/ | Quelle/GAS | METHODE | LASER | Anwendung | REF. |
|---|---|---|---|---|---|
| $Nb_2O_5$ $NbO_2$, NbO | $Nb/O_2$ | PLH | XeCl | Josephson Übergang | [19] |
| $Nb_2O_{5-\delta}$ | $Nb/O_2$ | LPPT | $CO_2$ | " | [18] |
| CdO | Cd/Luft | LH | $Kr^+$ | - | [20] |
| $CuO_2$ | Cu/ Luft | | | - | |
| $Al_2O_3$ | $Si/TMA+N_2O$ | LCVD | KrF, ArF | ersetzt $SiO_2$ | [21] |
| ZnO | Si, Quartz/ $DMZ+N_2O,NO_2$ | LCVD | ArF, KrF | piezoelektrisch | [22] |
| ZnO | $Si,Al_2O_3,Au,Ti$ Glass,GaAs/ZnO | LE | $CO_2$ | Solar Zelle Fenster | [23] |
| $Cr_2O_3$ | Cr/ Luft | PLH | Nd:glass | Mikroelektronik | [24] |
| $Cu_2O$ | Cu/ Luft | LH | $CO_2$ | - | [25] |
| $Ga_2O_3/$ $As_2O_3$ | $GaAs/O_2$ | PLM | Ruby | Passivierung | [26] |
| " | $GaAs/O_2$ | PLH | $Ar^+$ | Passivierung | [27] |
| CuO | Cu/ Luft | LH | $Kr^+$ | - | [65] |
| $TeO_2$ | Te/ Luft | | | - | |
| $In_2O_3$ InO | Quartz,InP $GaAs/O_2$ + $(CH_3)_3InP(CH_3)_3$ | LCVD | ArF | dielektrisch | [69] |

Tab . 2  Bildung von $SiO_x$ unter Verwendung einer Laser-Energiequelle

| MATERIAL/ OXYGEN – Quelle | METHODE | Wellenlänge | REFERENCE |
|---|---|---|---|
| $O^+$ Implant  Si | Pulse Laser Tempern | 1.06 µm | Chiang et al. [29] |
| a-Si/Luft od.$O_2$ | Pulse Laser " | 694 nm | Garulli et al. [30] |
| a-Si/$O_2$ | cw Laser " | 10.6 µm | Boyd [31] |
| c-Si/Luft od.$O_2$ | Pulse Laser Schmelzen | 1.06 µm 530 nm | Hoh et al. [32] |
| c-Si/$O_2$ | Pulse Laser Schmelzen | 308 nm | Orlowski et al. [33] |
| c-Si/$O_2$ | Pulse Laser Amorphbildung | 266 nm | Liu et al. [34] |
| c-Si/$O_2$ | cw Laser Heizen | 500 nm | Gibbons [35] |
| c-Si/$O_2$ od.Luft | cw Laser " | 10.6 µm 500 nm | Boyd et al. [36,37,49] |
| c-Si/$O_2$ | Pulse Laser | 694 nm | Cros et al. [38] |
| SiO/Luft | Photo-oxidation | 193 nm | Blum et al. [39] |
| c-Si/$SiH_4$ & $N_2O$ | Pulse Laser Photo abscheidung | 193 nm | Boyer et al. [40,41] |
| c-Si/$SiH_4$ & $N_2O$ | cw Laser Pyrolyse | 531 nm | Szikora et al. [42] |

aus Boyd:"Laser Processing and Diagnostics", Editor: D. Bäuerle, Springer Series in Chem. Phys. Vol.39 (1984), S.274

Patentansprüche

1. Verfahren zur Herstellung von Dünnschichtkondensatoren
auf einem Substrat, insbesondere einem Halbleitersubstrat
einer integrierten Schaltung,
wobei der Kondensator aus aufeinanderliegenden Schichten aus
abwechselnd einem Elektrodenmaterial und einem Dielektrikum
besteht,
g e k e n n z e i c h n e t      dadurch,
- daß die Schichten aus Dielektrikum nach einem laserstrahlungs-induzierten Abscheideverfahren aus der Gasphase
  (LCVD-Verfahren) hergestellt werden.

2. Verfahren nach Anspruch 1,      g e k e n n z e i c h -
n e t      dadurch, daß auch die Elektrodenschichten nach
einem laserstrahlungs-induzierten Abscheideverfahren aus der
Gasphase hergestellt werden.

3. Verfahren nach Anspruch 1 oder 2,      g e k e n n -
z e i c h n e t      dadurch, daß Siliziumdioxid als Dielektrikum abgeschieden wird.

4. Verfahren nach Anspruch 1 oder 2,      g e k e n n-
z e i c h n e t      dadurch, daß Aluminiumoxid als Dielektrikum abgeschieden wird.

5. Verfahren nach einem der Ansprüche 2 bis 4,      g e-
k e n n z e i c h n e t      dadurch, daß die Elektrodenschicht aus Aluminium mit einem laserstrahlungs-induzierten
Abscheideverfahren aus der Gasphase hergestellt wird.

0 182 377

6. Verfahren nach einem der Ansprüche 2 bis 4, g e -
k e n n z e i c h n e t   dadurch, daß die Elektrodenschicht aus Silizium mit einem laserstrahlungs-induzierten
Abscheideverfahren aus der Gasphase hergestellt wird.